# EUROPÄISCHE PATENTSCHRIFT

(11) **EP 3 020 327 B1**
(45) Veröffentlichungstag und Bekanntmachung des Hinweises auf die Patenterteilung: **31.01.2018**
(21) Anmeldenummer: 14003819.1
(22) Anmeldetag: 12.11.2014
(51) Int. Cl.: A61B 5/00, G01K 13/00, G01J 5/02, G01J 5/04, G01J 5/06, G01J 5/00, G01J 5/08

(54) **Ohrthermometer**
Ear thermometer
Thermomètre auriculaire

(43) Veröffentlichungstag der Anmeldung: 18.05.2016
(73) Patentinhaber: Europäische Akademie Bozen, 39100 Bozen (IT); Egebrecht, Michaela, 39011 Lana (IT)
(72) Erfinder: Brugger, Hermann, 39031 Bruneck (IT); Egebrecht, Michaela, 39011 Lana (IT)
(74) Vertreter: Samson & Partner Patentanwälte mbB

(56) Entgegenhaltungen:
- EP-A2- 0 461 068
- WO-A1-2010/099581
- WO-A1-2013/160580
- JP-A- H0 236 838
- US-A- 3 156 117
- US-A- 5 673 692
- US-A1- 2009 097 690
- US-A1- 2010 217 103

## Beschreibung

### GEBIET DER ERFINDUNG

Die vorliegende Erfindung bezieht sich allgemein auf Ohrthermometer zur Messung der Körpertemperatur und vorzugsweise weiterer physikalischer Parameter im Gehörgang eines Menschen oder Tieres.

### HINTERGRUND DER ERFINDUNG

Es sind allgemein Ohrthermometer bekannt, die über einen Infrarotsensor verfügen und die von einem Trommelfell eines Ohres eines Patienten abgestrahlte Infrarotstrahlung messen und so die Körpertemperatur eines Patienten ermitteln.

Bekannte Ohrthermometer sind in der Lage, die Temperatur in wenigen Sekunden zu messen und sind daher auch für Notfälle geeignet, bei denen schnell die Körpertemperatur eines Patienten ermittelt werden muss.

Die Genauigkeit der Temperaturmessung von Ohrthermometern hängt unter anderem von Umweltfaktoren ab, welche die Temperatur im Gehörgang beeinflussen können. Das ist bedeutsam bei kalten Außentemperaturen und bei der Messung der Körperkerntemperatur (sog. KKT) bei Unterkühlung. Zum Beispiel kann es im Feldeinsatz bei der Bergung von unterkühlten Patienten oder Lawinenopfern bei tiefen Umgebungstemperaturen zu Fehlmessungen kommen.

Aus der europäischen Patentanmeldung EP 0 461 068 A2 und der internationalen Patentanmeldung WO 2013/160580 A1 sind Ohrthermometer bekannt, bei denen der Gehörgang und die Ohrmuschel thermisch nach außen isoliert werden. Allerdings sind diese Geräte nur bedingt zur Messung der Körperkerntemperatur von unterkühlten Personen bei tiefen Temperaturen geeignet und die Handhabung ist aufwendig und kompliziert.

Aus JP H02 36838 A ist ein Ohrthermometer bekannt, bei dem ein Thermometer in einem Abschnitt gehalten wird, der gleichzeitig als eine Abdeckung für eine Ohrmuschel ausgestaltet ist.

Die internationale Veröffentlichung WO 2010/099581 A1 zeigt eine Hörhilfe, die von einer Ohrmuschel gehalten wird und eine einstellbare Halterung hat.

Die US-Patenschrift US 5,673,692 A zeigt eine Vorrichtung zur Überwachung von physiologischen Parametern, wie Temperatur und Sauerstoffsättigung, wobei die Vorrichtung in einem Gehörgang angeordnet wird.

Aus der US-Patentschrift US 3,156,117 A ist ein Ohrthermometer bekannt, bei dem ein Temperaturfühler im Ohr durch einen D-förmigen Rahmen gehalten wird, der an einer Ohrmuschel befestigt wird.

Eine Aufgabe der vorliegenden Erfindung ist es, ein verbessertes Ohrthermometer zur Verfügung zu stellen.

### ZUSAMMENFASSUNG DER ERFINDUNG

Nach einem Aspekt stellt die vorliegende Erfindung ein Ohrthermometer nach Anspruch 1 bereit.

Weitere Aspekte und Merkmale der vorliegenden Erfindung ergeben sich aus den abhängigen Ansprüchen, der beigefügten Zeichnung und der nachfolgenden Beschreibung bevorzugter Ausführungsbeispiele.

### KURZBESCHREIBUNG DER ZEICHNUNG

Ausführungsbeispiele der Erfindung werden nun beispielhaft und unter Bezugnahme auf die beigefügte Zeichnung beschreiben, in der gleiche Bezugszeichen identische oder ähnliche Teile bezeichnen und in der:
Fig. 1 ein erstes Ausführungsbeispiel eines Ohrthermometers in Übereinstimmung mit der vorliegenden Erfindung an einem Patienten angebracht veranschaulicht, wobei eine Abdeckhaube des Ohrthermometers teilweise geöffnet ist;
Fig. 2 eine Variante des Ohrthermometers von Fig. 1 darstellt, bei der die Abdeckhaube eine Temperaturanzeige aufweist;
Fig. 3 das Ohrthermometer ohne Abdeckhaube veranschaulicht und die Temperaturmesseinrichtung im Ohr des Patienten darstellt;
Fig. 4 das Ohrthermometer von Fig. 1 in einer weiteren Darstellung veranschaulicht, wobei die Temperaturmesseinrichtung im Inneren des Gehörgangs des Ohrs des Patienten dargestellt ist;
Fig. 5 eine ähnliche Darstellung eines Ohrthermometers wie Fig. 4 zeigt, wobei die Abdeckhaube ein transparentes Sichtfenster aufweist;
Fig. 6 die Temperaturmesseinrichtung im Detail veranschaulicht;
Fig. 7 die Temperaturmesseinrichtung von Fig. 6 mit einer Anzeige und integrierter Steuerung darstellt;
Fig. 8 eine Abwandlung der Temperaturmesseinrichtung von Fig. 7 darstellt und die drahtlose Übertragung von Messdaten an ein Mobiltelefon veranschaulicht;
Fig. 9 eine Abwandlung der Abdeckung des Ohrthermometers zeigt, die eine Temperaturanzeige und ein Sichtfenster hat;
Fig. 10 die Abdeckhaube der Abdeckung von Fig. 9 mit zwei Scharnieren darstellt;
Fig. 11 eine zweites Ausführungsbeispiel eines Ohrthermometers an einem Patienten angebracht veranschaulicht;
Fig. 12 das Ohrthermometer von Fig. 11 in einer Seitenansicht zeigt;
Fig. 13 die geöffnete Abdeckhaube des Ohrthermometers am Ohr veranschaulicht;
Fig. 14 die geöffnete Abdeckhaube im Detail zeigt;
Fig. 15 die Abdeckung von unten veranschaulicht, das heißt von der Seite, die am Kopf des Patienten angeordnet wird;
Fig. 16 die Abdeckung von oben zeigt;
Fig. 17 die Temperaturmesseinrichtung veranschaulicht;
Fig. 18 die Temperaturmesseinrichtung in einem Halterahmens der Abdeckung zeigt,
wobei die Steuerung am Halterahmen befestigt ist;
Fig. 19 den Halterahmen mit Isolationsmaterial zeigt;
Fig. 20 den Halterahmen in einer ausgezogenen Position zeigt;
Fig. 21 eine Abwandlung zeigt, bei der die Steuerung in der Abdeckhaube vorgesehen ist;
Fig. 22 Bestandteile der Ohrthermometer der Fig. 12 bis 22 und deren Zusammenbau veranschaulicht;
Fig. 23 ein weiteres Ausführungsbeispiel eines Ohrthermometers zeigt, wobei das Ohrthermometer nicht an einem Ohr eines Patienten angelegt ist;
Fig. 24 das Ohrthermometer von Fig. 23 an einem Ohr eines Patienten darstellt; und
Fig. 25 das Ohrthermometer von Fig. 23 und 24 mit geöffneter Abdeckung zeigt.

### BESCHREIBUNG DER BEVORZUGTEN AUSFÜHRUNGSBEISPIELE

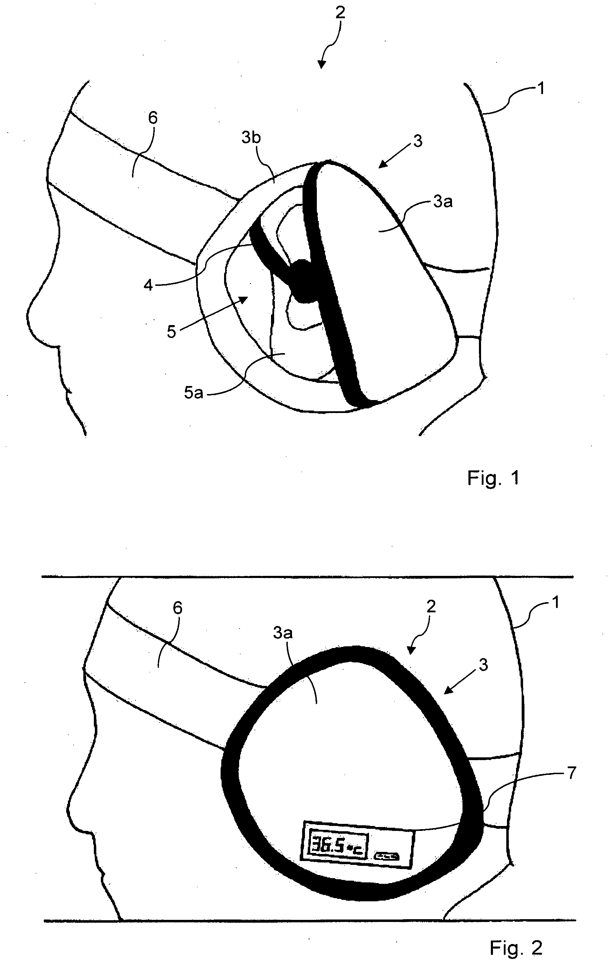

In Fig. 1 ist ein Ausführungsbeispiel in Übereinstimmung mit der vorliegenden Erfindung veranschaulicht. Vor einer detaillierten Beschreibung folgen zunächst allgemeine Erläuterungen zu bevorzugten Ausführungsbeispielen der Erfindung und deren Vorteile.

In unmittelbarer Nachbarschaft zum Ohr befindet sich der Warzenfortsatz (Mastoid) des Schläfenbeins. Dessen poröse Knochenstruktur, sein hoher Luftgehalt und seine direkte Luftverbindung mit dem Mittelohr bringt es mit sich, dass die Außentemperatur über das Mastoid in Richtung inneren Gehörgang geleitet werden kann. Aufgrund dieser anatomischen Besonderheit kann es zur Messung der Körperkerntemperatur eines Patienten sinnvoll sein, nicht nur den Gehörgang sondern auch die Umgebung der Ohrmuschel inkl. Mastoid vor äußeren Umwelteinflüssen wie Kälte, Wind, Nässe und dergleichen zu schützen, um eine zuverlässige Temperaturmessung mit einem Ohrthermometer zu erreichen.

Dementsprechend betreffen die Ausführungsbeispiele der vorliegenden Erfindung ein Ohrthermometer mit einer Temperaturmesseinrichtung, die dazu ausgelegt ist, eine Temperatur im Inneren des Gehörgangs eines Ohres eines Patienten zu messen und die einen Abdichtungsbereich aufweist, der dazu ausgelegt ist, den Gehörgang des Ohres zu verschließen. Außerdem hat das Ohrthermometer eine Abdeckung, die dazu ausgelegt ist, den Bereich um die Ohrmuschel des Ohrs, und insbesondere auch des Mastoids, herum zu verschließen, wobei die Temperaturmesseinrichtung derart mit der Abdeckung gekoppelt (z.B. lösbar verbunden) ist, dass die Abdeckung die Temperaturmesseinrichtung in einer definierten (z.B. optimalen) Position im Gehörgang des Ohres hält und bspw. fixiert, ohne mit dem Trommelfell in Berührung zu kommen.

Das Ohrthermometer weist folglich bei manchen Ausführungsbeispielen eine doppelte Abdichtung auf, die den (inneren) Abdichtungsbereich und die (äußere) Abdeckung aufweist, wobei der innere Abdichtungsbereich den Gehörgang abdichtet (z.B. thermisch isoliert) und die äußere Abdeckung den Bereich um Ohrmuschel (z.B. inklusive des Mastoids) herum nach außen isoliert. Diese doppelte Abdichtung erlaubt bei manchen Ausführungsbeispielen, den Einfluss der Außentemperatur auf die Messung im inneren Gehörgang zu minimieren oder ganz zu eliminieren.

Der innere Abdichtungsbereich der Temperaturmesseinrichtung kann den Gehörgang abdichten, sodass zwischen dem Trommelfell des Ohrs des Patienten und der Abdichtung der Temperaturmesseinrichtung eine erste Kammer entsteht, die (nahezu) luftdicht ist und thermisch isoliert ist und in der sich nach kurzer Zeit ein Mikroklima entwickelt, das von äußeren Umwelteinflüssen, wie Temperatur, Wind, Feuchtigkeit geringfügig beeinflusst wird. Dadurch herrschen in dieser ersten Kammer Temperaturverhältnisse, die eine von Umwelteinflüssen nahezu unabhängige Temperaturmessung erlauben.

Die äußere Abdeckung umschließt die Ohrmuschel und bildet damit eine zweite Kammer außerhalb des Gehörganges, die (nahezu) luftdicht ist und bei manchen Ausführungsbeispielen auch die luftleitenden knöchernen Anteile des Ohres (z.B. das Mastoid) thermisch isoliert, um die Einwirkung von Umwelteinflüssen auf das Ohr und die Temperaturmesseinrichtung zusätzlich zu minimieren oder ganz zu eliminieren. Bei manchen Ausführungsbeispielen erstreckt sich die Abdeckung auch wenigstens teilweise in den Bereich des Mastoids des Patienten oder vollständig um den Bereich des Mastoids herum, um auch diesen Bereich vor Umwelteinflüssen, insbesondere Kälte, Nässe und Wind zu schützen.

Die Abdeckung sitzt typischerweise fest am Kopf des Patienten, indem sie bspw. über ein flexibles Band, einen Riemen, einen Bügel oder dergleichen am Kopf des Patienten befestigt wird. Dadurch dass die Temperatureinrichtung mit der Abdeckung z.B. formschlüssig gekoppelt oder anderweitig verbunden ist und die Abdeckung "fest" am Kopf des Patienten sitzt, kann auch die Temperaturmesseinrichtung in einer definierten Position von der Abdeckung gehalten werden. Dadurch ist ein korrekter Sitz der Temperaturmesseinrichtung und des Abdichtungsbereiches im Gehörgang gewährleistet. Dadurch ist es außerdem bei manchen Ausführungsbeispielen möglich, die Temperaturmesseinrichtung möglichst nahe an das Trommelfell des Patienten heranzubringen, ohne dieses zu berühren, was die Messgenauigkeit, z.B. bei Messung der vom Trommelfell abgestrahlten Infrarotstrahlung, erhöht. Darüber hinaus kann dadurch dem Verrutschen der Temperaturmesseinrichtung im Gehörgang z.B. während eines Transports des Patienten entgegengewirkt werden.

Bei manchen Ausführungsbeispielen ist ein Temperatursensor, der bspw. die Infrarotstrahlung misst, die von dem Trommelfell des Patienten abgestrahlt wird, an einem Ende des Abdichtungsbereiches der Temperaturmesseinrichtung angeordnet, das dem Trommelfell zugewandt ist, wenn die Temperaturmesseinrichtung im Gehörgang platziert ist. Der Temperatursensor kann grundsätzlich beliebig ausgebildet sein und kann bspw. einen Infrarotsensor, ein Thermoelement, einen Thermistor oder dergleichen aufweisen.

Bei manchen Ausführungsbeispielen weist der Abdichtungsbereich mehrere zueinander beabstandete (z.B. stufenartige) Lamellenabschnitte zum Abdichten des Gehörgangs des Ohres auf. Dadurch werden die Abdichtung und die thermische Isolierung erhöht.

Bei manchen Ausführungsbeispielen weist die Temperaturmesseinrichtung einen flexiblen Kabelkanal auf. Der flexible Kabelkanal kann von dem Abdichtungsbereich bspw. zu einer Steuerung, die als Auswerteelektronik ausgestaltet sein kann, führen. Der flexible Kabelkanal kann so ausgestaltet sein, dass er sich durch entsprechendes Verbiegen teilweise um die Ohrmuschel des Patienten erstrecken kann und dadurch der Temperaturmesseinrichtung Halt gibt und sie in einer definierten Position hält.

Bei solchen Ausführungsbeispielen kann die Steuerung ebenfalls im Bereich der Ohrmuschel angeordnet sein und der Temperaturmesseinrichtung zusätzlichen Halt geben.

Die Steuerung kann in einem Gehäuse untergebracht sein, das eine äußere Form hat, die der typischen Form einer Ohrmuschel im Bereich hinter der Ohrmuschel in Richtung Hinterkopf angepasst ist, um einen guten Sitz zwischen Ohrmuschel und Schädel des Patienten zu ermöglichen.

Das Gehäuse kann auch noch weitere elektronische Bauteile aufnehmen. Außerdem kann es bspw. ein Batteriefach aufweisen, um eine Batterie als Stromquelle aufzunehmen. Ferner kann die Temperaturmesseinrichtung eine oder mehrere Schnittstellen aufweisen, wie bspw. eine kabelgebundene Schnittstelle (USB oder dergleichen) und eine drahtlose Schnittstelle (Wifi, Bluetooth oder dergleichen). Auch die Schnittstellen können wenigstens teilweise in dem Gehäuse vorgesehen sein.

Die Temperaturmesseinrichtung kann eine (Temperatur-)Anzeige zum Ausgeben einer gemessenen Temperatur aufweisen. Die Anzeige kann bspw. in dem Bereich der Steuerung angeordnet sein und sie kann auch mit in dem Gehäuse integriert vorgesehen sein, in dem die Steuerung untergebracht ist. Die Anzeige kann dabei so angeordnet sein, dass sie hinter dem Bereich der Ohrmuschel sichtbar ist.

Bei manchen Ausführungsbeispielen weist die Temperaturmesseinrichtung einen ersten Abschnitt zum Einführen in den Gehörgang und einen zweiten Abschnitt auf. An dem zweiten Abschnitt kann die Steuerung bzw. die Anzeige angeordnet sein. Der erste Abschnitt und der zweite Abschnitt können drehbar zu einander ausgestaltet sein. Der erste Abschnitt kann dabei auch den Abdichtungsbereich aufweisen und/oder der zweite Abschnitt kann den flexiblen Kabelkanal aufweisen. Dadurch ist eine Anpassung der Temperaturmesseinrichtung an die jeweilige Anatomie des Patienten, insbesondere hinsichtlich der Lage und Größe des Gehörgangs und der Ohrmuschel möglich und damit ist ein fester Sitz der Temperaturmesseinrichtung im Gehörgang gewährleistet.

Damit die (Temperatur-)Anzeige von außen lesbar ist und damit auch von außen der Sitz der Temperaturmesseinrichtung von überprüfbar ist, kann die Abdeckung ein transparentes Sichtfenster aufweisen. Das Sichtfenster kann bspw. aus Thermoglas oder einem anderen thermisch isolierenden, transparenten Material hergestellt sein.

Bei manchen Ausführungsbeispielen sind auch der erste und der zweite Abschnitt zueinander verschiebbar ausgestaltet. Zum Beispiel kann der zweite Abschnitt (teilweise) in den ersten Abschnitt geschoben werden oder umgekehrt. Dadurch ist eine noch genauere Anpassung der Temperaturmesseinrichtung an die Anatomie des Patienten möglich. Die Verschiebung des ersten Abschnitts gegenüber dem zweiten Abschnitt kann kontinuierlich (stufenlos) vorgesehen sein oder mit Stufen, z.B. durch eine entsprechende Rastung.

Bei manchen Ausführungsbeispielen weist die Abdeckung einen ersten Abschnitt zum Anordnen am Kopf des Patienten und zum Aufnehmen der Temperaturmesseinrichtung auf und einen zweiten Abschnitt, der lösbar mit dem ersten Abschnitt verbunden ist.

Der erste Abschnitt kann bspw. als Rahmen oder dergleichen ausgebildet sein, der so dimensioniert ist, dass er sich um die Ohrmuschel eines Patienten herum erstrecken kann.

Der erste Abschnitt kann auch beweglich, verschiebbar oder dergleichen ausgestaltet sein, sodass sich seine Ausdehnung an die Ausdehnung der Ohrmuschel anpassen lässt.

Der erste Abschnitt kann ein flexibles Band, einen Riemen oder dergleichen aufweisen, um mit dem Kopf des Patienten verbunden zu werden.

Die Abdeckung bzw. der erste Abschnitt kann außerdem eine Membran aufweisen, die bspw. elastisch ausgebildet ist und eine Öffnung aufweist. Die Membran kann aus einem elastischen Material wie Kautschuk, Neopren oder dergleichen gebildet sein. Die Öffnung kann mittig ausgebildet sein und die Membran kann bis auf die Öffnung vollständig in dem ersten Abschnitt ausgebildet sein. Wenn der erste Abschnitt als Rahmen ausgebildet ist, kann bspw. die Membran im Inneren an dem Rahmen befestigt sein. Zum Anlegen des Ohrthermometers wird die Ohrmuschel des Patienten durch die Öffnung in der Membran geführt. Die Öffnung der Membran ist so dimensioniert, dass sie sich um den Ansatz der Ohrmuschel am Kopf des Patienten herum anschmiegt. Die Öffnung ist typischerweise kleiner als eine Ohrmuschel ausgestaltet und die Ohrmuschel des Patienten wird durch elastisches Vergrößern der Öffnung in der Membran durch die Öffnung hindurchgeführt. Dadurch dass die Öffnung kleiner als die Ohrmuschel ist, sitzt die Membran fest am Ansatz der Ohrmuschel am Kopf und die Membran hält folglich die Abdeckung bzw. den ersten Abschnitt an der Ohrmuschel. Bei bestimmten Ausführungsbeispielen kann zusätzlich noch ein Band, wie oben beschrieben, vorgesehen sein.

Der erste Abschnitt kann eine Halterung, einen entsprechend geformten Halteabschnitt oder dergleichen zum Festhalten der Temperaturmesseinrichtung aufweisen.

Bei manchen Ausführungsbeispielen ist die Temperaturmesseinrichtung auch fest mit der Abdeckung bzw. ihrem ersten Abschnitt verbunden oder lösbar gekoppelt.

Der zweite Abschnitt kann deckelartig ausgebildet sein, z.B. als Abdeckhaube, und so dimensioniert sein, dass er bündig mit dem ersten Abschnitt abschließt. Der zweite Abschnitt kann dann auch das oben erwähnte Sichtfenster aufweisen.

Außerdem hat die Abdeckung bzw. ihr zweiter Abschnitt bei manchen Ausführungsbeispielen ebenfalls eine Temperaturanzeige. Die Übermittlung der Temperaturdaten an die Temperaturanzeige kann dabei über ein Kabel von der Temperaturmesseinrichtung zur Abdeckung erfolgen oder auch drahtlos von einer Steuerung der Temperaturmesseinrichtung. Außerdem ist bei manchen Ausführungsbeispielen die Steuerung der Temperaturmesseinrichtung (teilweise) in der Abdeckung bzw. in dem zweiten Abschnitt der Abdeckung vorgesehen.

Der erste und der zweite Abschnitt der Abdeckung können auch über ein Scharnier, eine Drehverbindung oder dergleichen miteinander verbunden sein. Dadurch kann der zweite Abschnitt vom ersten weggeklappt werden und so den Zugriff auf die Temperaturmesseinrichtung im Gehörgang des Patienten ermöglichen.

Bei manchen Ausführungsbeispielen weist die Temperaturmesseinrichtung eine Skala auf, um eine Eindringtiefe der Messeinrichtung in dem Gehörgang zu ermitteln. Die Skala kann zwei oder mehr Striche aufweisen, die gleich beabstandet sind oder unterschiedliche Abstände zueinander haben. Die Gehörganglänge bis zum Trommelfell kann beim erwachsenen Menschen bis zu 2,5 bis 3 cm lang sein. Die Skala zeigt daher bei manchen Ausführungsbeispielen einen Bereich von ca. 2 cm an, um die Eindringtiefe der Temperaturmesseinrichtung im Gehörgang anzugeben. Außerdem kann die Skala auch farbige Markierungen aufweisen. Zum Beispiel kann die Skala einen grünen Bereich aufweisen, der eine guten Eindringtiefe angibt, und einen roten Bereich, der eine zu tiefe Eindringtiefe angibt.

Bei manchen Ausführungsbeispielen weist die Abdeckung ein wärmeisolierendes Material auf, zum Beispiel in einem Auflagebereich der Abdeckung, in dem die Abdeckung am Kopf des Patienten aufliegt. Das wärmeisolierende Material kann an dem ersten Abschnitt der Abdeckung vorgesehen sein. Außerdem kann das wärmeisolierende Material am zweiten Abschnitt vorgesehen sein, um die Abdeckung im geschlossenen Zustand, d.h. wenn der zweite Abschnitt auf dem ersten Abschnitt anliegt, entsprechend abzudichten. Je nach Anforderung kann das wärmeisolierende Material einen Schaumstoff oder ein anderes Dichtungsmaterial aufweisen.

Das wärmeisolierende Material kann eine wasserabweisende Schicht aufweisen. Die wasserabweisende Schicht kann auch wasserdicht ausgestaltet sein und bspw. aus Kunststoff gebildet sein. Dadurch wird in feuchten Umgebungen (Regen, Schnee, Eis) verhindert, dass sich das wärmeisolierende Material (Schaumstoff) mit Wasser vollsaugt und dadurch seine Wirkung verliert.

Bei manchen Ausführungsbeispielen ist die Temperaturmesseinrichtung zur Messung der Pulsfrequenz und oder zur Messung der Sauerstoffsättigung des Blutes des Patient (Pulsoximetrie) ausgelegt. Dazu kann die Temperaturmesseinrichtung entsprechende Sensoren aufweisen, z.B. einen Sensor zur Messung der Pulsfrequenz und einen zur Messung der Sauerstoffsättigung oder einen optischen Sensor, der durch das Gewebe im Gehörgang gestreute Licht misst und aus der Wellenlängenveränderung des gestreuten Lichts die Pulsfrequenz und/oder Sauerstoffsättigung ermittelt.

Die Sensoren, d.h. der Temperatursensor, der Sensor zur Messung der Pulsfrequenz und/oder der Sensor zur Messung der Sauerstoffsättigung können jeweils einzeln oder auch gruppiert in einer Lamelle (Lamellenabschnitt) oder mehreren Lamellen (Lamellenabschnitten) des Abdichtungsbereiches angeordnet sein. Genauso kann bspw. ein Lichtemittent und ein Lichtempfänger des optischen Sensors in jeweils einem Lamellenabschnitt angeordnet sein, um durch das Gewebe des Gehörgangs gestreutes Licht zu messen.

Zur Pulsoximetrie können optische Daten mithilfe von LEDs und/oder Photodioden, die Bestandteil des Pulssensors bzw. Sauerstoffsättigungssensors bzw. des optischen Sensors sind, erhoben und mit einem speziellen Algorithmus, wie er bspw. in DE 10 2011 081 815 A1 offenbart ist, ausgewertet werden. Die Auswertung kann dabei in dem Sensor oder in der Steuerung des Ohrthermometers oder sogar außerhalb des Ohrthermometers vorgenommen werden. Die Temperatur kann zum Beispiel mit einem Widerstandsthermometer bestimmt werden.

Bei manchen Ausführungsbeispielen sind zwei Ohrthermometer bzw. zwei Temperatursensoren vorgesehen, um in jedem Ohr die Temperatur zu bestimmen. Dadurch können bspw. Temperaturdifferenzen festgestellt werden, wenn z.B. ein Ohr obstruiert ist und dort ein niedrigerer Temperaturwert festgestellt wird, als bei dem anderen Ohr.

Bei manchen Ausführungsbeispielen erfüllt das Ohrthermometer wenigstens teilweise folgende Anforderungen:
- Leichte Positionierung im Gehörgang des Patienten und Befestigung
- Messgenauigkeit mit max. Abweichung +/- 0,1 °C
- Schmerzfreie und sichere Anwendung für den Patienten
- Isolation des Gehörgangs nach Außen zur Erzeugung eines Mikroklimas im Gehörgang
- Außentemperaturbereich: -20 °C bis + 50°C
- Körpertemperaturbereich: 5 °C bis + 45°C
- Pulsoximetrie: Frequenz 1-240 bpm (+/- 3 bpm), O₂-Sättigung 0-99% (+/- 2%)
- Erste Messung innerhalb 2 Sekunden
- Messintervalle: kontinuierlich
- Batterie/Akku: 3 Monate auch bei schlechten Witterungen (Kälte/Hitze/Nässe bzw. hoher Luftfeuchtigkeit)
- Anzeige funktioniert auch bei schlechten Witterungen (Kälte/Hitze/Nässe bzw. hoher Luftfeuchtigkeit)
- Wasserdicht
- Höhentauglich
- Alarmsignal bei best. Temperaturunterschreitung, wobei das Alarmsignal akustisch und/oder optisch (Blinken oder dergleichen) ausgebildet sein kann

Zurückkommend zu Fig. 1 ist dort ein erstes Ausführungsbeispiel eines Ohrthermometers 2 an dem Kopf 1 eines Patienten gezeigt. In der folgenden Beschreibung bezeichnen gleiche Bezugszeichen identische bzw. ähnlich Teile bzw. Merkmale des Ohrthermometers 2.

Das Ohrthermometer 2 hat eine Abdeckung 3 und eine Temperaturmesseinrichturig 4, die im Folgenden auch Sonde 4 genannt wird.

Bei den Ausführungsbeispielen, die im Zusammenhang mit den Figuren 1 bis 10 erläutert werden, ist die Sonde 4 mit der Abdeckung 3 lösbar z.B. über eine Formschluss- oder eine Steckverbindung verbunden (siehe auch weiter unten), sodass die Sonde 4 unabhängig von der Abdeckung 3 eingesetzt werden kann. Die Sonde 4 kann auch in einem entsprechend ausgeformten Bereich der Abdeckung 3, der an die äußere Form der Sonde 4 angepasst ist, gehalten bzw. in ihrer Position stabilisiert werden. Dadurch kann bspw. bei einem Patienten die Sonde 4 schnell in den Gehörgang gesetzt werden und die Temperatur ermittelt werden. Die Abdeckung 3 kann dann später aufgesetzt werden, um die Sonde 4 und das Ohr 5 des Patienten vor Umwelteinflüssen zu schützen und die Genauigkeit der Temperaturmessung zu verbessern.

Die Abdeckung 3 hat einen ersten Abschnitt, der als Halterahmen 3b ausgebildet ist und einen zweiten Abschnitt, der als Abdeckhaube 3a ausgebildet ist. Der Halterahmen 3b ist mit einem elastischen Fixierband 6 am Kopf 1 des Patienten verbunden. Dazu hat der Halterahmen 3b eine Halterung für das elastische Fixierband 6. Der Halterahmen 3b erstreckt sich um ein Ohr 5 bzw. die Ohrmuschel 5a des Patienten herum.

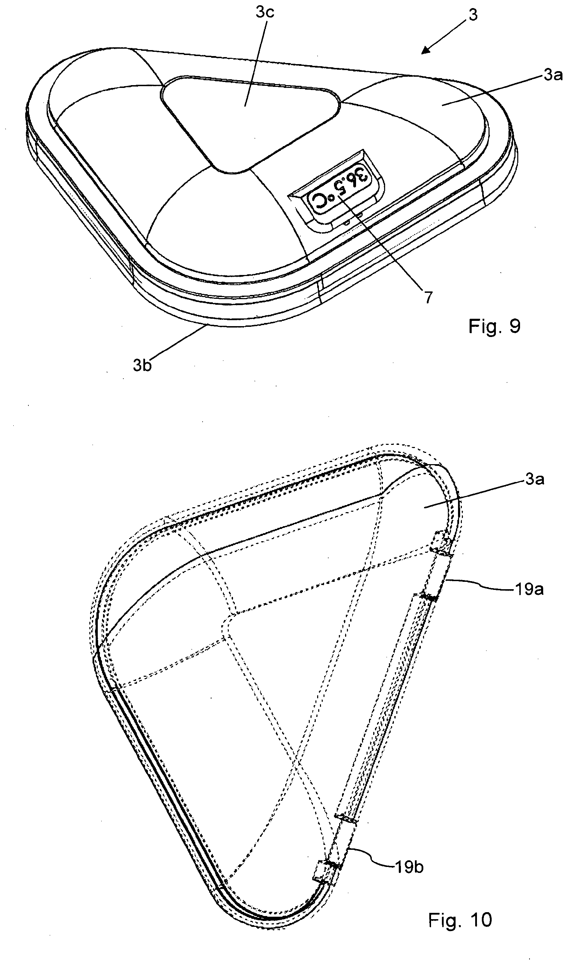

Die Abdeckhaube 3a kann geschlossen ausgestaltet sein, wie in Fig. 1 gezeigt ist. Sie kann aber auch eine Anzeige 7 aufweisen, auf der bspw. die mit der Sonde 4 gemessene Körpertemperatur des Patienten angezeigt werden kann, wie es in Fig. 2 und auch in Fig. 9 gezeigt ist. Die Anzeige 7 kann aber auch andere Parameter darstellen, wie bspw. einen Puls und/oder eine Sauerstoffsättigung.

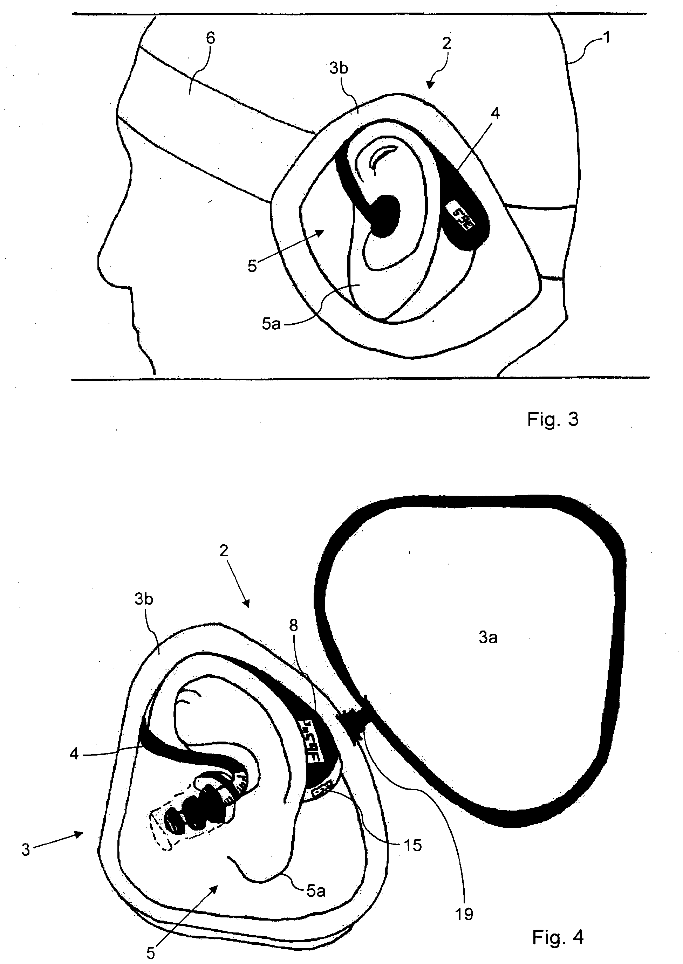

Die Sonde 4 kann auch eine Anzeige 8 haben, wie in Fig. 3 gezeigt ist und die Anzeige 8 kann die Temperatur, den Puls, die Sauerstoffsättigung und andere Daten anzeigen. Sie ist bspw. als LCD-Anzeige ausgestaltet.

Je nach Ausführungsbeispiel informiert die Anzeige 8 der Sonde 4 bzw. die Anzeige 7 der Abdeckhaube 3a kontinuierlich über die gemessene Köpertemperatur. Ist die Anzeige 8 mit in die Sonde 4 integriert, so kann die Temperatur auch abgelesen werden, wenn die Abdeckung 3 entfernt ist. Die Anzeigen 7 und 8 sind so ausgestaltet, dass ein Anlaufen ausgeschlossen ist und die dargestellten Zahlen sind in einem leicht lesbaren Format gestaltet. Darüber hinaus sind die Anzeige 7 und 8 so ausgestaltet, dass sie auch bei sehr niedrigen Außentemperaturen von bis zu -20°C zuverlässig funktionieren.

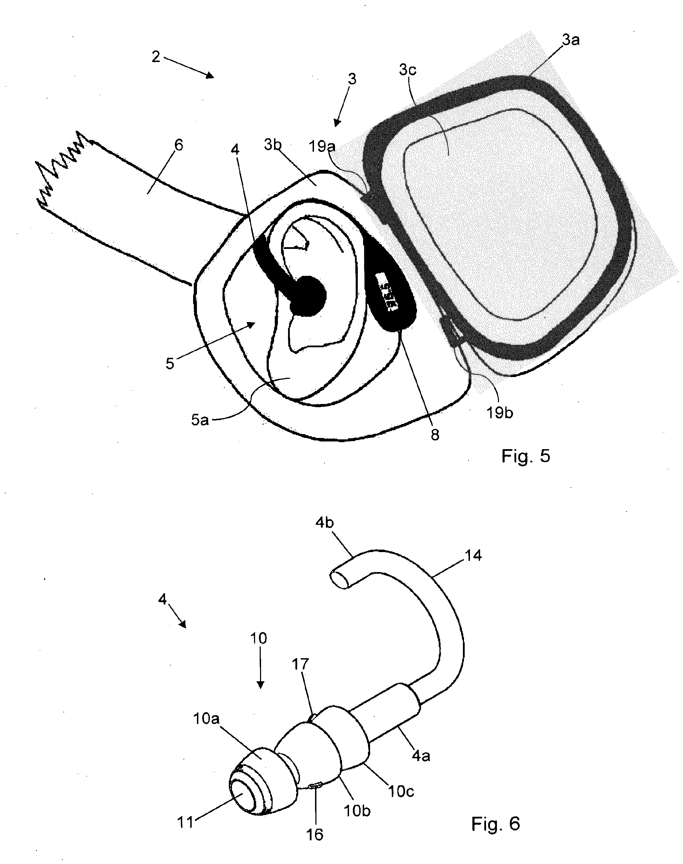

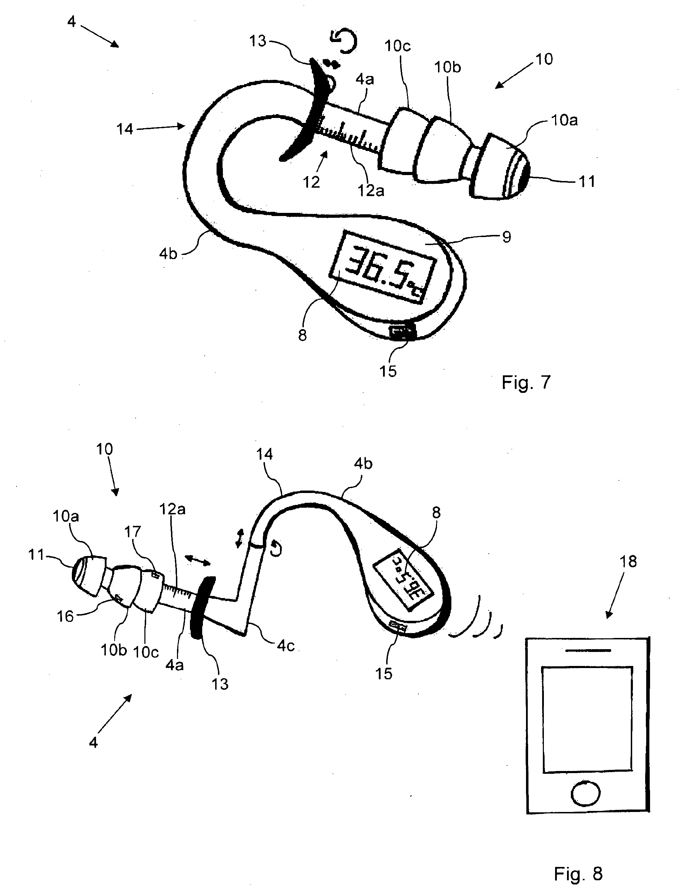

Um die Anzeige 8 der Sonde 4 und auch den Sitz der Sonde 4 im Gehörgang des Ohrs 5 des Patienten überwachen zu können, hat die Abdeckhaube 3a bei manchen Ausführungsbeispielen ein Sichtfenster 3c das aus Thermoglas hergestellt ist, wie es in Fig. 5 veranschaulicht ist und wie es auch in Fig. 7 gezeigt ist. Die Abdeckhaube 3a der Fig. 7 hat neben dem Sichtfenster 3c auch noch eine eigene Anzeige 7 zur Anzeige der Temperatur und andere gemessener Vitalparameter des Patienten.

Die Abdeckhaube 3a ist über ein Scharnier 19, wie in Fig. 4 gezeigt, oder auch über zwei Scharniere 19a und 19b, wie es in Fig. 10 gezeigt ist, mit dem Halterahmen 3b gekoppelt, sodass die Abdeckung 3 durch wegklappen der Abdeckhaube 3a geöffnet werden kann und so die Sonde 4 zugänglich ist, ohne dass die Abdeckung 3 entfernt werden muss. Dadurch kann bspw. der Sitz der Sonde 4 einfach überprüft und korrigiert werden, ohne dass die Abdeckung 3 komplett entfernt werden muss.

Bei manchen Ausführungsbeispielen ist das Scharnier 19 bzw. sind die Scharniere 19a und 19b so ausgestaltet, dass auch die Abdeckhaube 3a von dem Halterahmen 3b gelöst werden kann. Die Scharniere 19, 19a und 19b können bspw. als Klickscharniere oder dergleichen ausgestaltet sein.

Außerdem ist der Halterahmen 3b so ausgestaltet, dass er die Sonde 4 ebenfalls in einer bestimmten Position hält. Im vorliegenden Ausführungsbeispiel der Fig. 1 bis 10 ist der Halterahmen 3b so ausgeformt, dass er einen Clip an seiner Innenseite aufweist, in den die Sonde 4 eingeclipst werden kann. Bei anderen Ausführungsbeispielen ist bspw. ein Klettband in dem Halterahmen 3b vorgesehen oder ein anderes Haltemittel, um die Sonde 4 festzuhalten. Durch die Befestigung der Sonde 4 an der Abdeckung soll ein Verrutschen der Sonde 4 während eines Transports des Patienten verhindert werden.

Es kann auch Schaumstoff oder ein anderes isolierendes Material in dem Halterahmen 3b vorgesehen sein, in das die Sonde 4 eingebettet und/oder eingeklemmt werden kann.

Die Größe der Abdeckung 3 ist so dimensioniert, dass der Gehörgang sowie die Ohrmuschel 5a und der Mastoid des Patienten vor Kälteeinwirkung geschützt werden.

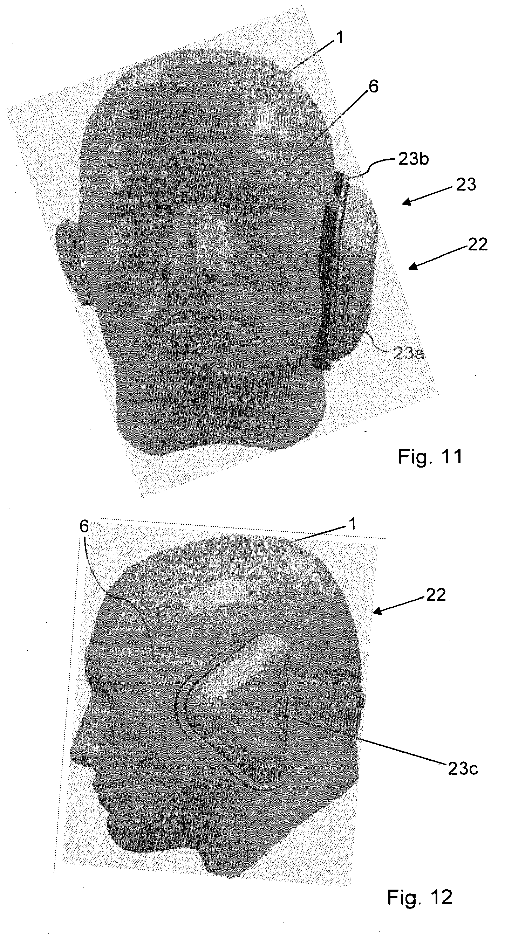

Die Abdeckung 3 kann Schaumstoff bzw. ein anderes (thermisch isolierendes) Material aufweisen, insbesondere an den Stellen des Halterahmens 3b an denen dieser am Kopf 1 des Patienten aufliegt. Außerdem kann Schaumstoff oder ein anderes Dichtungsmaterial an den Stellen vorgesehen sein, an denen die Abdeckhaube 3a an den Halterahmen 3b stößt. Die Isolierung der Abdeckung 3 wird auch noch genauer im Zusammenhang mit den Fig. 11 bis 21 und der dort gezeigten Abdeckung näher erläutert und die dort beschriebenen Isolationsvarianten finden auch bei dem vorliegend erörterten Ausführungsbeispiel Anwendung.

Die Abdeckung 3 kann aus verschiedenen Materialien hergestellt sein, wie z.B. Kunststoff und dergleichen. Sie kann auch hauptsächlich aus Schaumstoff hergestellt sein.

Die Isolierung zwischen dem Halterahmen 3b und dem Kopf 1 des Patienten ist typischerweise aus einem weichen, flexiblen Material hergestellt, um möglichst wenig Druck am Kopf des Patienten auszuüben.

Es kann aber auch die Abdeckhaube 3a und/oder der Halterahmen 3b aus einem weichen, flexiblen Material, wie z.B. Stoff oder Schaumstoff oder dergleichen hergestellt sein.

Analog zu herkömmlichen Ohrenschützern kann die Isolierung auch mit einem dünnen, wasserfesten Material überzogen sein, um das Eindringen und Einsaugen von Wasser in das Material, z.B. in den Schaumstoff zu verhindern.

Wie erwähnt, kann der Spalt zwischen Abdeckhaube 3a und Halterahmen 3b ebenfalls durch einen dünnen Schaumstoffstreifen abgedichtet werden. Die Abdeckhaube 3a kann außerdem durch Federkraft, die bspw. durch einen vorgespannten Bolzen im Scharnier 19, 19a bzw. 19b oder einer vorgesehenen Schließvorrichtung gegen den Schaumstoffstreifen, der bspw. am Halterahmen 3b angebracht ist, gepresst werden.

Alle anderen Elemente der Abdeckhaube 3 können aus Kunststoff oder einem ähnlichen, strapazierfähigen und leichten Material, wie z.B. Carbon, hergestellt sein, ohne dass die vorliegende Erfindung auf ein bestimmtes Material beschränkt ist. Die auf die Abdeckhaube 3 wirkenden Kräfte sind eher gering, sodass die Abdeckhaube 3 insgesamt aus dünnwandigen Kunststoffteilen hergestellten werden kann und damit ein geringes Gewicht haben kann.

Im Folgenden wird die Sonde 4 im Detail und unter Bezugnahme auf die Figuren 6 bis 8 beschrieben, wobei Fig. 6 den Grundaufbau der Sonde 4 darstellt und die Fig. 7 und Fig. 8 Abwandlungen zeigen.

Die Sonde 4 hat einen ersten Abschnitt 4a, der im Wesentlichen starr ausgebildet ist und einen zweiten Abschnitt 4b, der im Wesentlichen flexibel ausgestaltet ist und, wie in Fig. 7 und 8 gezeigt, auch als flexibler Kabelkanal 14 gefertigt sein kann.

Der zweite Abschnitt 4b, d.h. der flexible Kabelkanal 14 kann entsprechend bei manchen Ausführungsbeispielen an die Form und Größe der Ohrmuschel 5a angepasst werden, wodurch die Sonde 4 insgesamt einen guten Halt am Ohr 5 erhält. Außerdem sollte der zweite, flexible Abschnitt 4b nicht zu starr sein, um die Übertragung von Kräften auf die Ohrmuschel 5a bzw. die Abdeckung 3, die auf den flexiblen Abschnitt 3b übertragen werden, nicht (zu stark) auf den ersten Abschnitt 3a zu übertragen, der im Gehörgang angeordnet ist.

Der zweite Abschnitt 4b kann auch gegenüber dem ersten Abschnitt 4a verschiebbar sein; wie weiter unten noch im Zusammenhang mit den Fig. 7 und 8 erläutert wird. Dadurch ist eine noch genauere Anpassung an die Ohrmuschel 5a und den Gehörgang bzw. die Position des Gehörgangs im Ohr 5 möglich.

Der erste Abschnitt 4a hat einen Abdichtungsbereich 10 der drei Lamellenabschnitte 10a, 10b und 10c hat. Die Lamellenabschnitte 10a-10c sind schirmartig ausgebildet und sind aus einem weichen Material ausgebildet, welches sich an die anatomischen Gegebenheiten des Gehörgangs des Patienten anpassen kann. Das Material kann auch gummiartig sein. Außerdem können die Lamellenabschnitte 10a, 10b und 10c bei manchen Ausführungsbeispielen unterschiedliche, von der Spitze aus gesehen größer werdende Durchmesser haben.

An der Spitze des ersten Abschnitts 4a an der Stirnseite ist ein Temperatursensor 11 angebracht, sodass dieser die von dem Trommelfell des Patienten abgestrahlte Infrarotstrahlung aufnehmen kann. Bei anderen Ausführungsbeispielen weist der Temperatursensor bspw. Metall-Widerstände für die Temperaturmessung auf. Die vorliegende Erfindung ist nicht auf einen bestimmten Temperatursensor beschränkt. Die Temperatur des Trommelfells ist in der Regel höher als jene, die in dem umliegenden Bereich inklusive Gehörgang vorherrscht. Daher ist es sinnvoll, die Temperatur so nahe wie möglich am Trommelfell zu bestimmen.

Die Lamellenabschnitte 10a, 10b und 10c verschließen den Gehörgang, sodass zwischen dem Trommelfell des Patienten und der Sonde 4 eine kleine Kammer entsteht in der, durch den Verschluss des Gehörgangs durch die Lamellenabschnitte 10a, 10b und 10c, ein Mikroklima entsteht. Dadurch, dass diese kleine Kammer durch die Sonde 4 vor Umwelteinflüssen (Kälte, Wasser, etc.) geschützt ist, kann die Temperaturmessgenauigkeit erhöht werden.

Außerdem klemmen sich die Lamellenabschnitte 10a, 10b und 10c bis zu einem gewissen Grad in dem Gehörgang fest und halten damit die Sonde 4 und dadurch auch den Temperatursensor 11 in einer definierten Position im Gehörgang und stabilisieren die Sonde 4. Die Lamellenabschnitte 10a, 10b und 10c sorgen auch bei einer leichten Verschiebungen des zweiten Abschnitts 4b gegenüber dem ersten Abschnitt 4a für einen unveränderten Sitz im Gehörgang.

Wie erwähnt, ist der Temperatursensor 11 in dem ersten Lamellenabschnitt 10a aufgenommen. Das Material des Temperatursensors 11 kann eine möglichst konstante Widerstandsbahn mit einem möglichst großen Temperaturkoeffizienten aufweisen und es enthält z.B. Platin. Die Messung der Temperatur mit einem solchen Temperatursensor ist auch bspw. in EP 1 922 989 A2 offenbart. Die Offenbarung von EP 1 922 989 A2 wird durch Bezugnahme Bestandteil dieser Beschreibung. Der Temperatursensor 11 muss nicht an der Spitze der Sonde 4 angeordnet sein, sondern er kann auch seitlich angeordnet sein, z.B. an der Seite des ersten Lamellenabschnitts 10a und somit direkt die Temperatur an der Gehörgangswand ermitteln.

In dem zweiten Lamellenabschnitt 10b und dritten Lamellenabschnitt 10c sind ein Sender 16 (Lichtemitter) bzw. ein Empfänger 17 (Lichtempfänger) für eine optische Messeinrichtung vorgesehen, die eine Messung der Sauerstoffsättigung im Blut und eine Messung des Pulses ermöglichen.

Zur Bestimmung des Pulses und der arteriellen Sauerstoffsättigung des Blutes werden optische Daten mithilfe von LEDs und/oder Fotodioden der optischen Messeinrichtung aufgenommen und mit einem Algorithmus, wie er bspw. in DE 10 2011 081 815 A1 offenbart ist, ausgewertet. Die Offenbarung von DE 10 2011 081 815 A1 wird durch Bezugnahme Bestandteil dieser Beschreibung.

Eine Funktionsweise der optischen Messeinrichtung ist bspw. ebenfalls aus EP 1 922 989 A2 bekannt. Die Sauerstoffsättigung wird durch eine optische Messung bestimmt.

Durch den Sender 16 wird ein Lichtweg durch die Wand des äußeren Gehörgangs, d.h. durch das Gewebe der Gehörgangswand erzeugt und das so vom Gewebe gestreute Licht wird vom Empfänger 17 empfangen. Über die Wellenlängen des reflektierten Lichtes lässt sich unter anderem eine Aussage über den Sauerstoffgehalt des Blutes treffen. Bei der Messung wird Shuntlicht vermieden, da dies zu Messfehlern führt. Das Shuntlicht kann von den Lamellenabschnitten 10b und 10c abgeschirmt werden und so die Messgenauigkeit erhöhen, da sie lichtundurchlässig sind und das Shuntlicht blockieren und den direkten Weg des Lichts vom Sender 16 zum Empfänger 17 in dem Gehörgang unterbrechen. Dementsprechend wird vom Empfänger 17 nur Licht detektiert, welches durch das Gewebe den Lichtempfänger 17 erreicht. Auch die Anordnung des Senders 16 auf einer Seite des Lamellenabschnitts 10b und die Anordnung des Empfängers 17 auf der anderen gegenüberliegenden Seite des nächsten Lamellenabschnitts 10c sperrt den direkten Lichtweg zwischen Sender 16 und Empfänger 17.

Die Sonde 4 kann außerdem ein Begrenzungselement 13 haben, wie in Fig. 7 und 8 gezeigt ist, um die Eindringtiefe der Sonde 4 in den Gehörgang zu begrenzen und um den Gehörgang abzuschließen.

An dem ersten Abschnitt 4a der Sonde 4 der Fig. 7 und 8 ist außerdem eine Skala 12 mit Skalenstrichen 12a vorgesehen (mit Angabe in mm), um die Einführtiefe in den Gehörgang einschätzen zu können. Die Gehörganglänge bis zum Trommelfell kann beim erwachsenen Menschen bis zu 2,5 bis 3 cm lang sein. Die Skala 12 zeigt daher einen Bereich von ca. 2 cm an.

Außerdem ist der erste Abschnitt 4a der Sonde 4 von Fig. 7 gegenüber dem zweiten Abschnitt 4b und damit gegenüber dem flexiblen Kabelkanal 14 drehbar und verschiebbar. Bei der Sonde 4 von Fig. 8 ist noch ein weiterer steifer dritter Abschnitt 4c zwischen dem ersten Abschnitt 4a und dem zweiten Abschnitt 4b, der als flexibler Kabelkanal 14 ausgebildet ist, eingefügt. Hier ist der erste Abschnitt 4a gegenüber dem dritten Abschnitt 4c drehbar und verschiebbar und der dritte Abschnitt 4c ist gegenüber dem zweiten Abschnitt 11b drehbar und verschiebbar ausgestaltet. Dadurch kann die Sonde 4 noch genauer an die Anatomie des Ohres 5 angepasst und noch leichter im Gehörgang platziert werden.

Bei der Variante der Fig. 6 und 7 der Sonde 4 ist am Ende des zweiten Abschnitts 4b, d.h. am Ende des flexiblen Kabelkanals 14, ein Gehäuseabschnitt 9 vorgesehen, der sowohl die Anzeige 8 als auch eine Steuerung sowie entsprechende Schnittstellen, z.B. eine USB-Schnittstelle 15 und eine drahtlose Schnittstelle, beherbergt.

Der Gehäuseabschnitt 9 ist hier flach und rund ausgebildet und so geformt, dass er hinter der Ohrmuschel 5a, d.h. zwischen Ohrmuschel 5a und Kopf 1 des Patienten, angeordnet werden kann. Dadurch stabilisiert der Gehäuseabschnitt 9 ebenfalls den Sitz der Sonde 4 im Gehörgang des Patienten.

Die Steuerung im Gehäuseabschnitt 9 dient als Auswerte- und Übertragungseinheit der gemessenen und empfangenen Temperaturmesswerte und der optischen Messewerte von dem Empfänger 17. Außerdem dient die Steuerung der Steuerung des Temperatursensors 11 und des Senders 16 und Empfängers 17.

Die Steuerung kann die entsprechende Messwerte auf der Anzeige 8 speichern, anzeigen und/oder über eine Schnittstelle, wie die USB-Schnittstelle 15 oder eine drahtlose Schnittstelle an eine andere Anzeige, wie bspw. die Anzeige 7 in der Abdeckhaube 3a und/oder an ein externes Gerät übermitteln, wie bspw. an ein Mobiltelefon 18 (Fig. 8), einen Tablet-PC oder dergleichen. Auf dem Mobiltelefon 18 kann ein entsprechendes Programm (App) vorgesehen sein, das die Daten abspeichert, anzeigt, etc.

Eine elektrische Energiequelle kann ebenfalls in dem Gehäuseabschnitt 9 vorgesehen sein. Um den Ansprüchen des Energiemanagements Rechnung zu tragen, kann die Energiequelle als Ultra Low-Power Akkumulator ausgestaltet sein.

Wie oben angedeutet, können die Kabelverbindungen zwischen der Steuerung bzw. der Energiequelle im Gehäuseabschnitt 9 und den Sensoren 11, 16 und 17 als flexibler Kabelkanal 14 ausgebildet sein und damit eine elastische Halterung für die Sonde 4 darstellen. Dazu können bspw. die Kabel durch eine entsprechend ausgestaltete Schutzhülle geführt werden. Das Kabel kann aus hochflexiblen Litzen bestehen, um trotz der ständigen Bewegungen und Biegungen langlebig zu sein. Die Verlustleistung in den Sensoren ist typischerweise sehr gering, sodass die Leiterquerschnitte sehr klein gewählt werden können.

Zum Beispiel kann die folgende Anzahl an Kabelverbindungen zur Auswerteelektronik der Steuerung benötigt werden:
- Temperatursensor 11: zwei bis drei Kabelverbindungen bei zweigeteilter Widerstandsbahn, bei dreigeteilter Widerstandsbahn werden vier Kabelverbindungen benötigt usw.
- Optische Messeinrichtung (Sender 16, Empfänger 17): vier Kabelverbindungen, wobei bei einer gemeinsamen Spannungsversorgung nur drei Kabelverbindungen vorgesehen sein können.

Die Versorgungsspannung des Temperatursensors 11 liegt typischerweise im Bereich von 4 bis 8 Volt. Batterien von Hörgeräten oder ähnlichen mikroelektronischen Geräten haben typischerweise Spannungen von ca. 1,2 oder 1,4 Volt. Um den Temperatursensor mit dieser Spannungsquelle zu betreiben, ist daher bei manchen Ausführungsbeispielen ein "DC-DC-step up" Converter vorgesehen. Aufgrund der geringen elektrischen Leistung können die Komponenten des Converters klein ausgeführt sein und deshalb zusammen mit der Steuerung in dem Gehäuseabschnitt 9 integriert werden.

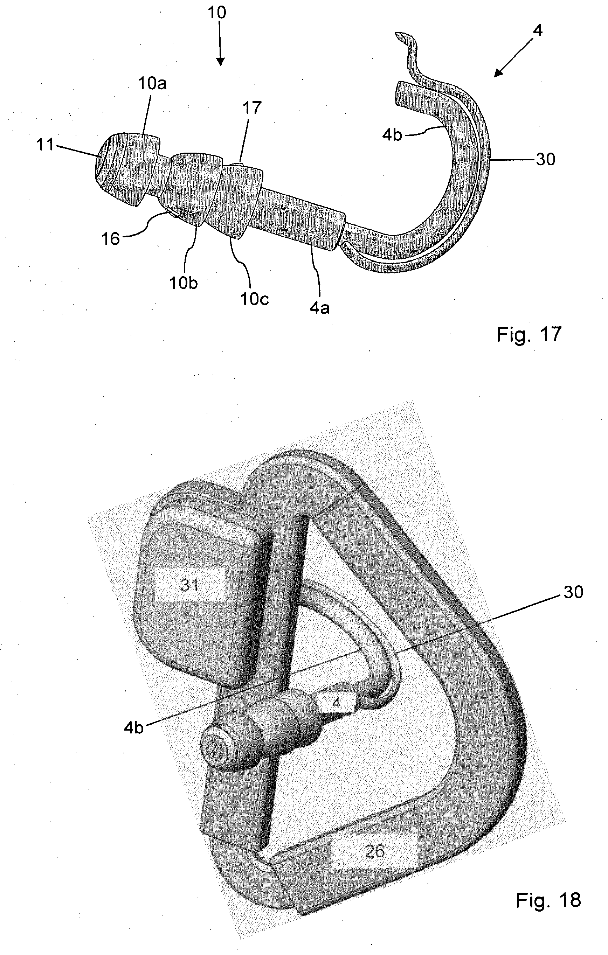

Bei den nun im Zusammenhang mit den Fig. 11 bis 22 erläuterten Ausführungsbeispielen eines Ohrthermometers 22 ist im Gegensatz zu den Ausführungsbeispielen der Fig. 1 bis 10 die Sonde 4 (siehe auch Fig. 17 und 18) nicht mehr einzeln und gesondert von der Abdeckung ausgeführt, sondern mit in der Abdeckung integriert.

Das Ohrthermometer 22 hat eine Abdeckung 23, die im Wesentlichen bis auf die im Folgenden beschriebenen Unterschiede der oben erörterten Abdeckung 3 entspricht, weswegen die obigen Ausführungen zur Abdeckung 3 auch für die Abdeckung 23 gelten.

Das Ohrthermometer 22 ist über ein flexibles Band 6, das an der Abdeckung 23 befestigt ist, an dem Kopf 1 des Patienten befestigt (siehe Fig. 11, 12 und 13).

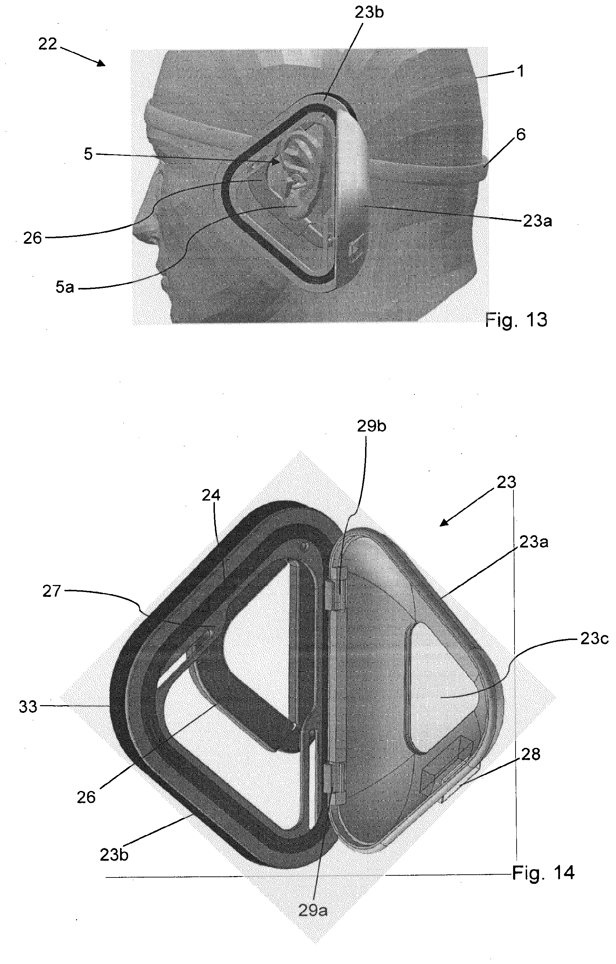

Die Abdeckung hat eine Abdeckhaube 23a und einen Halterahmen 23b. Die Abdeckhaube 23a hat ein Sichtfenster 23c, welches aus Thermoglas gefertigt ist, und sie ist über zwei Scharniere 29a und 29b mit dem Halterhamen 23a verbunden und kann entsprechend geöffnet und geschlossen werden (siehe auch Fig. 13 und Fig. 14). Wie oben ausgeführt, dient das transparente Sichtfenster 23c, das hier in Dreiecksform ausgeführt ist, zur Überwachung der Lage der Sonde 4 und zur einfachen Zugänglichkeit.

Der Halterahmen 23b hat an seiner Oberseite einen Isolationsstreifen 24 aus Schaumstoff oder einem anderen Dichtungsmaterial in dem Bereich in dem die Kante der Abdeckhaube 23a eingreift, wenn die Abdeckung 23 geschlossen wird. Dadurch dichtet die Abdeckung 23 im geschlossenen Zustand ab. Der Isolationsstreifen 24 kann bspw. eine Dicke von 1,5 mm haben.

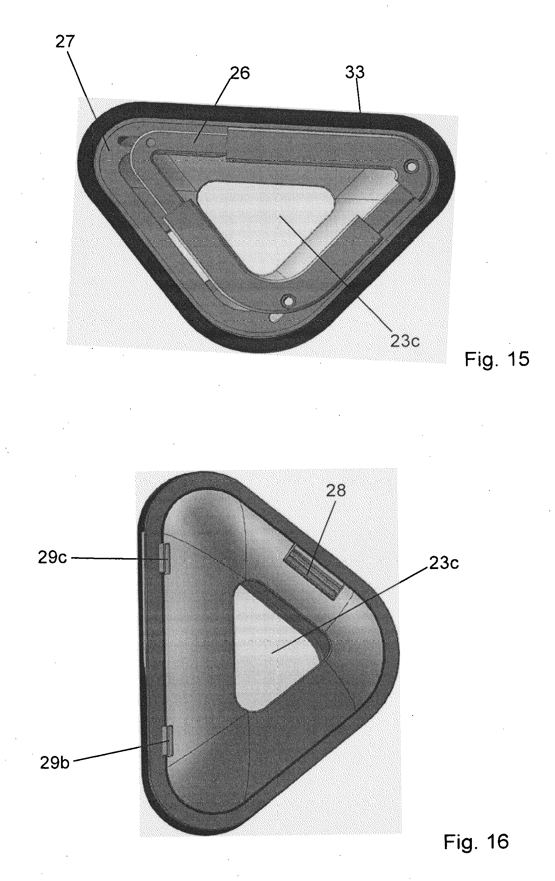

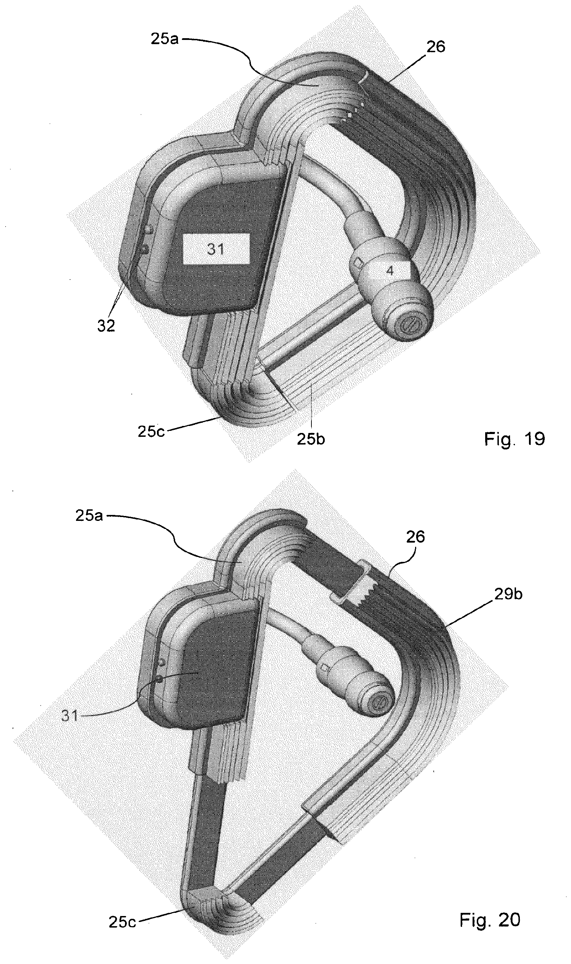

Der Halterahmen 23b hat außerdem einen beweglichen Rahmen 26, der an die Größer der Ohrmuschel 5a des Ohres 5 des Patienten angepasst werden kann (siehe auch Fig. 19 und Fig. 20, wobei in Fig. 20 der bewegliche Rahmen 26 auseinandergezogen ist). An dem beweglichen Rahmen 26 kann eine Isolation 25 angebracht sein, die aus Schaumstoff hergestellt ist, und die sich in drei Teile 25a, 25b und 25c unterteilt (Fig. 19 und 20, wobei die Fig. 15 und 18 die Variante ohne Schaumstoff an dem beweglichen Rahmen 26 zeigt), die an entsprechenden Abschnitten des beweglichen Rahmens 26 angebracht sind. Außerdem kann der Halterahmen 23b eine weitere Schaumstoffschicht 33 haben, die sich an der Seite um den Halterahmen 23b erstreckt, die dem Kopf 1 des Patienten zugewandt ist. Je nach Ausführung ist folglich die Schaumstoffschicht 33 und/oder die Isolationsschicht 25 vorgesehen.

Der bewegliche Rahmen 26 ist über Schrauben an einem Schienenrahmen 27 des Haltrahmens 23b verschiebbar befestigt (siehe Fig. 14). Bei anderen Ausführungsbeispielen kann statt der Schraubenverbindung auch eine Steckverbindung zwischen dem Schienenrahmen 27 und dem beweglichen Rahmen 26 vorgesehen sein.

Das Ohrthermometer 22 hat außerdem eine Steuerung in einem Gehäuse 31, die mit der Sonde 4 über ein Kabel 30 verbunden, welches parallel zum zweiten Abschnitt 4b angeordnet ist (siehe auch Fig. 17 und 18). Wie oben erwähnt, entspricht die Sonde 4 der oben erläuterten Sonde 4 und wird daher hier nicht weiter beschrieben. Der zweite Abschnitt 4b ist hier als flexible Halterung ausgebildet und die Sonde 4 ist mit dem zweiten Abschnitt 4b an dem beweglichen Rahmen 26 befestigt. Beim Aufsetzen des Halterahmens 23b auf den Kopf 1 des Patienten wird folglich auch die Sonde 4 in den Gehörgang geführt und durch die Fixierung des Halterahmens 23b auch gleich mit fixiert.

Das Gehäuse 31, in dem die Steuerung sitzt, weist auch eine Anzeige 34 auf, die durch ein entsprechendes Sichtfenster 28 der Abdeckhaube 23a (siehe Fig. 16) sichtbar ist. Außerdem hat das Gehäuse 31 zwei LEDs 32 zum Anzeigen von verschiedenen Betriebszuständen der Steuerung in dem Gehäuse 31.

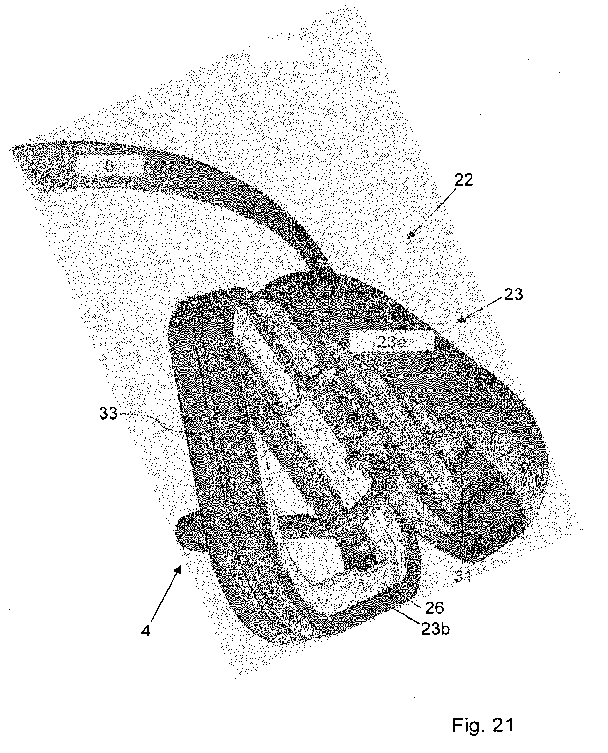

Das Gehäuse 31 ist so ausgestaltet, dass es einerseits auf den beweglichen Rahmen 26 aufgesteckt werden kann (Fig. 18-20) oder in die Abdeckhaube 23a gesteckt werden (Fig. 21), sodass folglich der Halterahmen 23b auch ohne Abdeckhaube 23a mit dem Gehäuse 31 versehen werden kann und folglich die Steuerung und die Anzeige 34 enthält.

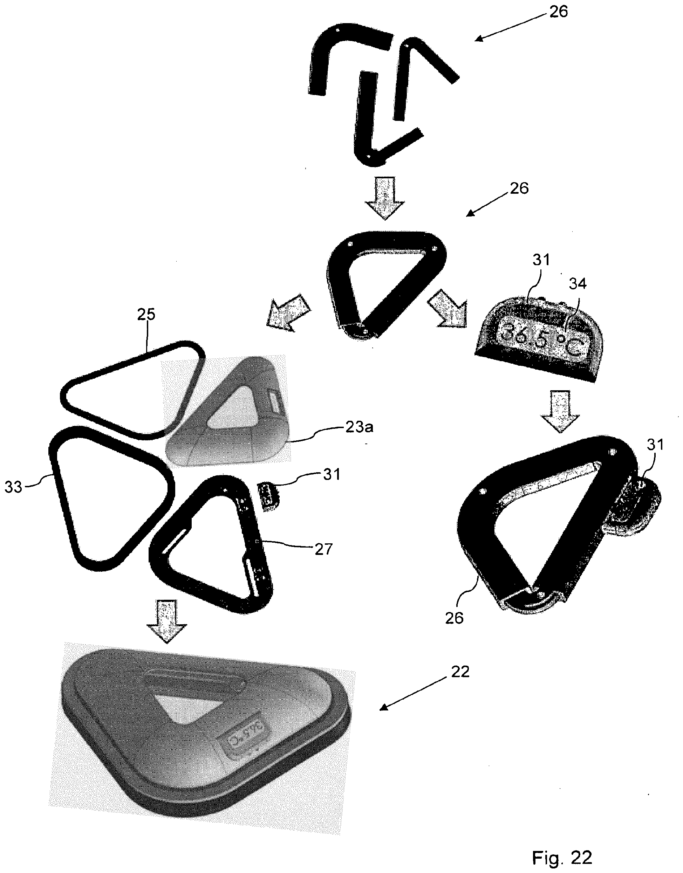

Dies ist auch in Fig. 22 veranschaulicht, die zeigt, dass der bewegliche Rahmen 26 zusammen mit der Abdeckhaube 23a, dem Gehäuse 31 und dem Schienenrahmen 27 zusammengesetzt werden kann (linker Zweig) oder der bewegliche Rahmen 26 mit dem Gehäuse 31 verbunden werden kann.

Dementsprechend kann die Sonde 4 mit der Steuerung und der Anzeige 34 im Gehäuse 31 mit oder ohne Abdeckhaube 23a verwendet werden.

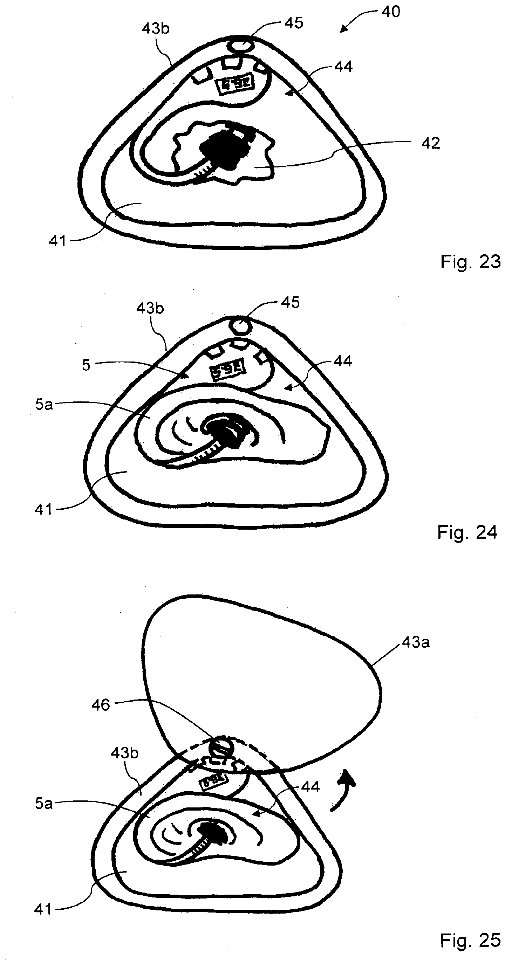

Ein weiteres Ausführungsbeispiel eines Ohrthermometers 40 wird im Folgenden unter Bezugnahme auf die Fig. 23 bis 25 erörtert, wobei Fig. 23 das Ohrthermometer 40 in einem neutralen Zustand zeigt, bevor es an einem Patienten angeordnet wird. Fig. 24 zeigt das Ohrthermometer 44 in einem an einem Ohr 5 des Patienten angebrachten Zustand und Fig. 25 veranschaulicht das Ohrthermometer 44 mit geöffneter Abdeckung 43.

Das Ohrthermometer 40 umfasst die Abdeckung 43 und eine Temperaturmesseinrichtung 44, welche im Wesentlichen der Sonde 4, wie sie oben beschrieben wurde, entspricht, weswegen auch auf eine detaillierte Beschreibung der Temperaturmesseinrichtung 44 an dieser Stelle verzichtet und vollumfänglich auf die obige Beschreibung verweisen wird. Die Temperaturmesseinrichtung 44 hat bspw. eine Anzeige (wie bspw. die Anzeige 8 in Fig. 3), eine Skala (wie bspw. die Skala 12 in Fig. 7 und 8), einen flexiblen Kabelkanal (wie Kabelkanal 14 in Fig. 7 und 8) und/oder einen Abdichtungsbereich mit Temperatur- und/oder Pulssensor (wie bspw. Abdichtungsbereich 10 in Fig. 7 und 8 und Sensoren 11, 16 und 17 in Fig. 7 und 8).

Die Abdeckung 43 hat einen Halterahmen 43b und eine Abdeckhaube 43a. Die Abdeckhaue 43a ist über eine Drehverbindung mit dem Halterahmen 43b drehbar verbunden. Dazu hat der Halterahmen 43b eine Öffnung 45, in die durch eine entsprechende Öffnung in der Abdeckhaube 43a ein Stift 46 eingeführt wird, sodass die Abdeckhaube 43a an dem Halterahmen 43b befestigt ist. Zum Öffnung der Abdeckung 43 kann die Abdeckhaube 43a weggedreht werden, wie es in Fig. 45 veranschaulicht ist.

Der Halterahmen 43b ist so ausgestaltet, dass er die Temperaturmesseinrichtung 44 in einer bestimmten Position hält. Dazu kann der Halterahmen 43b, wie oben im Zusammenhang mit den Fig. 1 bis 10 ausgeführt ist, einen Clip an seiner Innenseite aufweisen, in den die Temperaturmesseinrichtung 44 eingeclipst werden kann oder er ist entsprechend ausgeformt, um die Temperaturmesseinrichtung 44 zu halten oder es ist ein anderes Haltemittel am Halterahmen 43b vorgesehen, wie oben bereits ausgeführt wurde.

Im Gegensatz zu den oben erörterten Ausführungsbeispielen hat das Ohrthermometer 40 eine Membran 41, die in dem Halterahmen 43b befestigt ist. Die Membran 41 hat eine mittig angeordnete Öffnung 42, die einen Durchmesser hat, der kleiner als die Ohrmuschel 5a des Ohrs 5 eines Patienten ist.

Die Membran 41 ist elastisch und aus einem elastischen Material gefertigt (z.B. Kautschuk, Neopren oder dergleichen). Um das Ohrthermometer 40 an dem Ohr 5 des Patienten anzubringen, wird die Ohrmuschel 5a durch die Öffnung 42 in der Membran 41 geführt, sodass sich die Membran 41 um den Ansatz zwischen Ohrmuschel 5a und dem Kopf des Patienten schließt und die Membran 41 zwischen der Ohrmuschel 5a und dem Kopf des Patienten angeordnet ist (siehe Fig. 24). Dadurch hält die Membran 41 an dem Ohr 5 und damit hält auch der Halterahmen 43b und die an ihm befestigte Abdeckhaube 43a an dem Ohr 5 des Patienten, sodass bspw. auf ein Band zur Befestigung, wie es oben im Zusammenhang mit den Fig. 1 bis 10 erörtert wurde, verzichtet werden kann.

Die Temperaturmesseinrichtung 44 wird von dem Halterahmen 43b und der Ohrmuschel 5a des Patienten gehalten, wie es auch schon weiter oben beschrieben wurde, wobei die Temperaturmesseinrichtung 44 oberhalb der Membran 41 angeordnet ist und daher bei geöffneter Abdeckhaube 43a zugänglich ist.

Die Abdeckung 43 kann entsprechend der oben erörterten Abdeckung 3 ausgestaltet sein.

Die vorliegende Erfindung ist nicht auf die oben beschriebenen Ausführungsbeispiele beschränkt, sondern es können einzelnen Merkmal der verschiedenen Ausführungsbeispiele miteinander kombiniert werden.

## Patentansprüche

1. Ohrthermometer, mit:
einer Temperaturmesseinrichtung (4, 44), die dazu ausgelegt ist, eine Temperatur im Inneren des Gehörgangs eines Ohres (5) eines Patienten zu messen und die einen Abdichtungsbereich (10) aufweist, der dazu ausgelegt ist, den Gehörgang des Ohres (5) thermisch zu verschließen, und
einer Abdeckung (3, 23, 43), die dazu ausgelegt ist, die Ohrmuschel (5a) des Ohrs (5), und insbesondere auch einen Bereich des Mastoids, thermisch zu verschließen, **dadurch gekennzeichnet, dass**
die Abdeckung (3, 23, 43) einen ersten Abschnitt (3b, 23b, 43b) zum Anordnen am Kopf (1) des Patienten und zum Aufnehmen der Temperaturmesseinrichtung (4, 44) aufweist, wobei die Temperaturmesseinrichtung (4, 44) derart mit dem ersten Abschnitt (3b, 23b, 43b) der Abdeckung (3, 23, 43) verbunden ist, dass der erste Abschnitt (3b, 23b, 43b) die Temperaturmesseinrichtung (4, 44) in einer definierten Position im Gehörgang des Ohres (5) hält,
die Abdeckung (3, 23, 43) einen zweiten Abschnitt (3a, 23a) aufweist, der dazu ausgestaltet ist, die Ohrmuschel (5a) zu umschließen, und
der erste (3b, 23b) und der zweite Abschnitt (3a, 23a) der Abdeckung (3, 23) über ein Scharnier (19, 19a, 19b, 29a, 29b) oder eine Drehverbindung (45, 46) lösbar miteinander verbunden sind.

2. Ohrthermometer nach Anspruch 1, wobei der Abdichtungsbereich (10) mehrere zueinander beabstandete Lamellenabschnitte (10a, 10b, 10c) zum Abdichten des Gehörgangs des Ohres (5) aufweist.

3. Ohrthermometer nach einem der vorhergehenden Ansprüche, wobei die Temperaturmesseinrichtung (4, 44) einen flexiblen Kabelkanal (14) aufweist.

4. Ohrthermometer nach einem der vorhergehenden Ansprüche, wobei die Temperaturmesseinrichtung (4, 44) weiter eine Anzeige (8) zum Ausgeben einer gemessenen Temperatur, und insbesondere zum Anzeigen eines optischen Alarmsignals, aufweist.

5. Ohrthermometer nach Anspruch 4, wobei die Temperaturmesseinrichtung (4, 44) einen ersten Abschnitt (4a) zum Einführen in den Gehörgang aufweist und einen zweiten Abschnitt (4b), an dem die Anzeige (8) angeordnet ist, wobei der erste Abschnitt (4a) und der zweite Abschnitt (4b) drehbar zu einander ausgestaltet sind.

6. Ohrthermometer nach Anspruch 5, wobei die Temperaturmesseinrichtung (4, 44) eine Steuerung aufweist, die an dem zweiten Abschnitt (4b) angeordnet ist.

7. Ohrthermometer nach einem der vorhergehenden Ansprüche, wobei die Abdeckung (3, 23, 43) ein Sichtfenster (3c, 23c) aufweist.

8. Ohrthermometer nach einem der vorhergehenden Ansprüche, wobei die Abdeckung (3, 23, 43) ein Band (6) und/oder eine Membran (41) zur Befestigung an dem Kopf (1) des Patienten aufweist.

9. Ohrthermometer nach einem der vorhergehenden Ansprüche, wobei die Temperaturmesseinrichtung (4, 44) eine Skala (12) aufweist, um eine Eindringtiefe der Temperaturmesseinrichtung in dem Gehörgang zu ermitteln.

10. Ohrthermometer nach einem der vorhergehenden Ansprüche, wobei die Abdeckung (3, 23, 43) ein wärmeisolierendes Material (24, 25, 33) aufweist.

11. Ohrthermometer nach Anspruch 10, wobei das wärmeisolierende Material (25, 33) in einem Auflagebereich der Abdeckung (3) vorgesehen ist, in dem die Abdeckung (3) am Kopf des Patienten aufliegt.

12. Ohrthermometer nach einem der Ansprüche 10 oder 11, wobei das wärmeisolierende Material (24, 25, 33) eine wasserabweisende Schicht aufweist.

13. Ohrthermometer nach einem der vorhergehenden Ansprüche, wobei die Temperaturmesseinrichtung (4, 44) weiter zur Messung eines Pulses und/oder einer Sauerstoffsättigung des Patienten ausgelegt ist.

## Claims

1. Ear thermometer with:
a temperature-measuring device (4, 44) which is designed to measure a temperature in the interior of the auditory canal of an ear (5) of a patient and which has a sealing region (10) designed to thermally close the auditory canal of the ear (5), and
a cover (3, 23, 43) designed to thermally close the pinna (5a) of the ear (5), and in particular also a region of the mastoid, **characterized in that**
the cover (3, 23, 43) has a first portion (3b, 23b, 43b) for placing on the head (1) of the patient and for receiving the temperature-measuring device (4, 44), wherein the temperature-measuring device (4, 44) is connected to the first portion (3b, 23b, 43b) of the cover (3, 23, 43) in such a way that the first portion (3b, 23b, 43b) holds the temperature-measuring device (4, 44) in a defined position in the auditory canal of the ear (5),
the cover (3, 23, 43) has a second portion (3a, 23a), which is designed to surround the pinna (5a), and
the first portion (3b, 23b) and the second portion (3a, 23a) of the cover (3, 23) are connected to each other releasably via a hinge (19, 19a, 19b, 29a, 29b) or a rotary connection (45, 46).

2. Ear thermometer according to Claim 1, wherein the sealing region (10) has a plurality of lamella portions (10a, 10b, 10c) spaced apart from each other for sealing the auditory canal of the ear (5).

3. Ear thermometer according to one of the preceding claims, wherein the temperature-measuring device (4, 44) has a flexible cable duct (14).

4. Ear thermometer according to one of the preceding claims, wherein the temperature-measuring device (4, 44) moreover has a display (8) for outputting a measured temperature, and in particular for displaying an optical alarm signal.

5. Ear thermometer according to Claim 4, wherein the temperature-measuring device (4, 44) has a first portion (4a) for insertion into the auditory canal, and a second portion (4b) on which the display (8) is arranged, wherein the first portion (4a) and the second portion (4b) are designed to be rotatable relative to each other.

6. Ear thermometer according to Claim 5, wherein the temperature-measuring device (4, 44) has a control, which is arranged on the second portion (4b).

7. Ear thermometer according to one of the preceding claims, wherein the cover (3, 23, 43) has a viewing window (3c, 23c).

8. Ear thermometer according to one of the preceding claims, wherein the cover (3, 23, 43) has a band (6) and/or a diaphragm (41) for securing on the head (1) of the patient.

9. Ear thermometer according to one of the preceding claims, wherein the temperature-measuring device (4, 44) has a scale (12) for determining a depth of penetration of the temperature-measuring device in the auditory canal.

10. Ear thermometer according to one of the preceding claims, wherein the cover (3, 23, 43) has a heat-insulating material (24, 25, 33).

11. Ear thermometer according to Claim 10, wherein the heat-insulating material (25, 33) is provided in a bearing region of the cover (3) in which the cover (3) bears on the head of the patient.

12. Ear thermometer according to either of claims 10 and 11, wherein the heat-insulating material (24, 25, 33) has a water-repellent layer.

13. Ear thermometer according to one of the preceding claims, wherein the temperature-measuring device (4, 44) is further designed to measure a pulse and/or an oxygen saturation of the patient.

## Revendications

1. Thermomètre auriculaire, comprenant :
un dispositif de mesure de température (4, 44), qui est conçu pour mesurer une température à l'intérieur du conduit auditif d'une oreille (5) d'un patient et qui comprend une zone d'étanchéité (10) conçue pour obturer thermiquement le conduit auditif de l'oreille (5), et
un cache (3, 23, 43), qui est conçu pour obturer thermiquement le pavillon (5a) de l'oreille (5), et en particulier également une zone du mastoïde, **caractérisé en ce que**
le cache (3, 23, 43) comprend une première partie (3b, 23b, 43b) destinée à être agencée sur la tête (1) du patient et à recevoir le dispositif de mesure de température (4, 44), dans lequel le dispositif de mesure de température (4, 44) est relié à la première partie (3b, 23b, 43b) du cache (3, 23, 43) de telle manière que la première partie (3b, 23b, 43b) maintient le dispositif de mesure de température (4, 44) dans une position définie dans le conduit auditif de l'oreille (5),
le cache (3, 23, 43) comprend une deuxième partie (3a, 23a), qui est conçue pour entourer le pavillon (5a) de l'oreille, et
la première (3b, 23b) et la deuxième partie (3a, 23a) du cache (3, 23) sont reliées l'une à l'autre de manière libérable par l'intermédiaire d'une charnière (19, 19a, 19b, 29a, 29b) ou d'une liaison rotative (45, 46).

2. Thermomètre auriculaire selon la revendication 1, dans lequel la zone d'étanchéité (10) comprend plusieurs parties de lamelle (10a, 10b, 10c) espacées les unes des autres destinées à étanchéifier le conduit auditif de l'oreille (5).

3. Thermomètre auriculaire selon l'une quelconque des revendications précédentes, dans lequel le dispositif de mesure de température (4, 44) comprend un chemin de câble (14) flexible.

4. Thermomètre auriculaire selon l'une quelconque des revendications précédentes, dans lequel le dispositif de mesure de température (4, 44) comprend en outre un écran (8) pour l'affichage d'une température mesurée, et en particulier pour l'affichage d'un signal d'alarme optique.

5. Thermomètre auriculaire selon la revendication 4, dans lequel le dispositif de mesure de température (4, 44) comprend une première partie (4a) destinée à être introduite dans le conduit auditif et une deuxième partie (4b) sur laquelle l'écran (8) est agencé, dans lequel la première partie (4a) et la deuxième partie (4b) peuvent être amenées en rotation l'une par rapport à l'autre.

6. Thermomètre auriculaire selon la revendication 5, dans lequel le dispositif de mesure de température (4, 44) comprend une commande qui est agencée sur la deuxième partie (4b).

7. Thermomètre auriculaire selon l'une quelconque des revendications précédentes, dans lequel le cache (3, 23, 43) comprend une fenêtre d'inspection (3c, 23c).

8. Thermomètre auriculaire selon l'une quelconque des revendications précédentes, dans lequel le cache (3, 23, 43) comprend une bande (6) et/ou une membrane (41) destinées à être fixées sur la tête (1) du patient.

9. Thermomètre auriculaire selon l'une quelconque des revendications précédentes, dans lequel le dispositif de mesure de température (4, 44) comprend une échelle (12) afin de déterminer une profondeur de pénétration du dispositif de mesure de température dans le conduit auditif.

10. Thermomètre auriculaire selon l'une quelconque des revendications précédentes, dans lequel le cache (3, 23, 43) comprend un matériau thermo-isolant (24, 25, 33).

11. Thermomètre auriculaire selon la revendication 10, dans lequel le matériau thermo-isolant (25, 33) est prévu dans une zone d'appui du cache (3) dans laquelle le cache (3) repose sur la tête du patient.

12. Thermomètre auriculaire selon l'une quelconque des revendications 10 ou 11, dans lequel le matériau thermo-isolant (24, 25, 33) comprend une couche hydrophobe.

13. Thermomètre auriculaire selon l'une quelconque des revendications précédentes, dans lequel le dispositif de mesure de température (4, 44) est conçu en outre pour mesurer un pouls et/ou une saturation en oxygène du patient.
